# EUROPÄISCHE PATENTSCHRIFT

(11) **EP 2 683 965 B1**
(45) Veröffentlichungstag und Bekanntmachung des Hinweises auf die Patenterteilung: **25.07.2018**
(21) Anmeldenummer: 12707481.3
(22) Anmeldetag: 29.02.2012
(51) Int. Cl.: F16H 25/16, F16H 55/08

(54) **VORRICHTUNG FÜR EIN VAKUUM UND ZUM ÜBERTRAGEN ODER ERMÖGLICHEN EINER BEWEGUNG**
DEVICE FOR VACUUM AND FOR TRANSMITTING OR FOR ENABLING A MOVEMENT
DISPOSITIF POUR UN VIDE ET POUR LA TRANSMISSION OU POUR ASSURER UNE MOUVEMENT

(30) Priorität: 07.03.2011 DE 102011013245
(43) Veröffentlichungstag der Anmeldung: 15.01.2014
(73) Patentinhaber: CreaTec Fischer & Co. GmbH, 74391 Erligheim (DE)
(72) Erfinder: BRAUN, Wolfgang, 74321 Bietigheim-Bissingen (DE)
(74) Vertreter: Kotitschke, Bernd
(86) Internationale Anmeldenummer: PCT/EP2012/000872
(87) Internationale Veröffentlichungsnummer: WO 2012/119719

(56) Entgegenhaltungen:
- EP-A1- 0 556 115
- EP-A1- 1 873 420
- EP-A1- 1 970 474
- WO-A1-03/095128
- WO-A1-2010/006550
- DE-A1- 19 834 056
- DE-A1-102004 050 536
- DE-A1-102005 005 169
- DE-U1- 9 411 086
- US-A- 4 579 083
- US-A1- 2006 058 151

## Beschreibung

Die Erfindung betrifft eine Vakuumanlage mit einer Vorrichtung insbesondere zur Bewegungsübertragung, Kraft-/Drehmomentübertragung und/oder Bewegungsermöglichung, vorzugsweise zur Ausbildung eines Gelenks, eines Getriebes, eines Lagers, einer Führung oder dergleichen, gemäss dem Oberbegriff des Anspruchs 1 und wie sie aus der US4579083A bekannt ist. Die Vorrichtung ist vorzugsweise geeignet für eine Bedampfungseinrichtung zum Bedampfen eines Substrats mit einem Verdampfungsmaterial, insbesondere zur Molekularstrahlepitaxie, und vorzugsweise geeignet für den Einsatz in einem Vakuum oder gar Ultrahochvakuum.
Ultrahochvakuum ausbildende Bedampfungseinrichtungen zum Bedampfen eines Substrats mit einem Verdampfungsmaterial sind im Stand der Technik in unterschiedlichen Ausführungsformen bekannt. Eine beispielhafte Ausführungsform ist z.B. in DE 10 2007 012 370 A1 beschrieben. Herkömmliche Bedampfungseinrichtungen weisen üblicherweise eine Beschichtungs- oder Prozesskammer und zusätzliche Hilfskammern auf, wovon eine z.B. als Ladekammer ausgebildet sein kann. Die Kammern sind durch einen Transfertunnel verbunden, der durch ein Vakuumventil verschlossen werden kann. Die Kammern werden durch Vakuumpumpen zur Erzeugung eines Vakuums, insbesondere Hochvakuums evakuiert. Ein zu bedampfendes Werkstück wird nach Belüftung der Ladekammer über eine Ladeklappe in die Ladekammer eingeführt, woraufhin die Ladeklappe verschlossen und die Ladekammer abgepumpt wird. Nach dem Erreichen eines ausreichend niedrigen Drucks wird das Werkstück in der Ladekammer auf eine niedere Temperatur geheizt, um Oberflächenverunreinigungen wie z.B. Wasser oder Feuchtigkeit abzuheizen. Danach wird das Vakuumventil geöffnet und das Werkstück mit einer Transfereinrichtung in die Prozesskammer gebracht. Dort wird es an einer rotierbaren Heizeinrichtung, dem Substratmanipulator, angebracht, wo es für die Beschichtung beheizt und rotiert wird. Der Fluss des Verdampfungsguts aus dem Verdampferofen wird durch ein Verschlussteil vor dem Verdampferofen unterbrochen oder freigegeben. Nach der Bedampfung wird die Rotation gestoppt, die Probe abgekühlt und wieder in die Ladekammer transferiert, von wo aus sie nach dem Belüften der Ladekammer entnommen werden kann. Es ist ersichtlich, dass verschiedene Bewegungsvorgänge im Vakuum erforderlich sind, z.B. Drehbewegungen wie z.B. zur Werkstückdrehung, näherungsweise lineare Bewegungen wie z.B. für Verdampferzellenverschlüsse, näherungsweise lineare Bewegungen über relativ große Distanzen wie sie z.B. für den Werkstück-/Probentransfer notwendig sind, etc..

In der Vakuum- insbesondere der Ultrahochvakuumtechnik können keine organischen Stoffe im Kontakt mit dem Vakuum verwendet werden, wenn man extrem niedrige Basisdrücke (z.B. 1,0 x 10⁻¹⁰ mbar) erreichen will. Dies trifft insbesondere dann zu, wenn gleichzeitig hohe Temperaturen (z.B. über 500°C) auftreten, wie z.B. bei Bedampfungsprozessen erforderlich. Für bewegliche Teile stehen deshalb organische Schmiermittel nicht zur Verfügung. Die Materialauswahl ist auf hochschmelzende Metalle und Keramiken mit niedrigem Dampfdruck beschränkt. Für Linearbewegungen z.B. wird oft eine gleitende Bewegung eines harten, glatt polierten Teils, z.B. einer Edelstahl-Schubstange, in einer weicheren Buchse, z.B. aus Bronze, genutzt. Solche Kombinationen haben aber in der Regel eine eher geringe Lebensdauer, weil durch die fehlende Schmierung das weichere Material schnell abgetragen wird. Findet zusätzlich eine Belegung der Oberflächen durch verdampftes Material statt, wird das glatte Teil oft rau und es sinkt durch die dadurch erhöhte Reibung die Lebensdauer weiter. Rotationsbewegungen z.B. erfordern im Allgemeinen eine Achse mit endlichem Durchmesser. Somit tritt auch hier Reibung zwischen zwei Oberflächen auf. Normalerweise werden für diesen Anwendungsfall im Vakuum Kugellager verwendet, die aber nur auf den ersten Blick das Problem vermeiden, indem das Gleiten zweier Teile durch eine Rollbewegung ersetzt wird. Die Kugeln müssen aber durch Kugellagerkäfige in ihrer Position gehalten werden, die wiederum flächig an den Kugeln reiben und zu einer suboptimalen Standzeit führen. Selbst käfiglose Kugellager weisen dieses Problem auf, da hier die Kugeln mit der doppelten Abrollgeschwindigkeit seitlich gegeneinander reiben. So wird oft doch mit Schmiermitteln auf Feststoffbasis gearbeitet, welche jedoch als kleinste Partikel die Vakuumprozesse verunreinigen können und lediglich eine Verlängerung der Standzeit bewirken, da sie sich durch die Bewegung aus den Lagern arbeiten.

Zum allgemeinen Stand der Technik kann noch auf die WO 2010/006550 A1, die WO 03/095128 A1, die DE 10 2005 005169 A1, die US 2006/058151 A1, die DE 198 34 056 A1, die EP 1 873 420 A1, die DE 94 11 086 U1 und die DE 10 2004 050536 A1.

In Anbetracht obiger Ausführungen wird es Fachleuten anhand dieser Offenbarung ersichtlich, dass ein Bedarf an der Lösung oder Überwindung oben beschriebener Probleme oder Nachteile besteht. Diese Erfindung bezieht sich auf diesen Bedarf des Standes der Technik sowie auf andere Bedürfnisse, die Fachleuten anhand dieser Offenbarung ersichtlich werden.
Die sich aus vorstehend Genanntem ergebenden Aufgaben können insbesondere mit den Merkmalen des unabhängigen Anspruchs gelöst werden. Die Erfindung ist jedoch nicht auf Ausführungsformen beschränkt, die sämtliche eingangs genannten Probleme oder Nachteile des Standes der Technik beseitigen. Vielmehr beansprucht die Erfindung auch allgemein Schutz für die nachstehend beschriebenen Ausführungsbeispiele.
Die Erfindung beruht auf der Erkenntnis, dass mittels einer Dreh- und/oder Schwenkbewegung eines vorzugsweise als Schneide ausgebildeten Eingriffsteils in einer Kerbe praktisch reibungsfreie oder zumindest reibungsarme Bewegungen realisierbar sind. Dabei sind Ausführungsformen möglich, bei denen Dreh- und/oder Schwenkbewegungen um eine einzige Achse (z.B. um Winkel kleiner 90°), um beliebige Winkel mit mehreren Achsen und/oder quasilineare Bewegungen möglich sind.
Gemäß der Erfindung wird eine Vakuumanlage mit einer Vorrichtung bereitgestellt, die insbesondere zur (vorteilhaft reibungsarmen und/oder schmiermittelfreien) Bewegungsübertragung, Kraftübertragung, Drehmomentübertragung, Bewegungsermöglichung, etc. geeignet ist, mit den Merkmalen des Anspruchs 1. Vorzugsweise ist die Erfindung zur Ausbildung eines (vorteilhaft reibungsarmen und/oder schmiermittelfreien) Gelenks, Getriebes, Lagers, Führungsmechanismus, etc.. geeignet.

Die Erfindung dient insbesondere zur reibungsarmen und/oder schmiermittelfreien Bewegungsübertragung, Kraftübertragung, Drehmomentübertragung, Bewegungsermöglichung, etc., vorzugsweise zur reibungsarmen und/oder schmiermittelfreien Ausbildung eines Gelenks, Getriebes, Lagers, Führung, etc..

Die Vorrichtung ist besonders für eine Vakuumanlage geeignet, vorzugsweise für eine Bedampfungseinrichtung zum Bedampfen eines Substrats mit einem Verdampfungsmaterial und/oder zur Molekularstrahlepitaxie.

Die Vorrichtung ist insbesondere für den Einsatz in einem Vakuum oder gar Ultrahochvakuum geeignet (z.B. ≤ 1,0 x 10⁻⁸ mbar), vorzugsweise bei extrem niedrigen Basisdrücken (z.B. < 1,0 x 10⁻¹⁰ mbar) und/oder hohen Temperaturen (z.B. > 500°C) .

Die Vorrichtung umfasst eine oder mehrere Kerben, die jeweils einen Kerbengrund aufweisen, und ein oder mehrere Eingriffsteile, die jeweils einen Stirnbereich aufweisen, wobei zumindest ein Kerbengrund und zumindest ein Stirnbereich zur beweglichen, insbesondere sich kontaktierenden und/oder formschlüssigen Wirkverbindung miteinander vorgesehen sind.

Vorteilhaft kann mittels der beweglichen Wirkverbindung eine reibungsarme, insbesondere schmiermittelfreie Bewegung realisiert werden. Darüber hinaus kann die Vorrichtung vorteilhaft wellenfrei realisiert werden, insbesondere wellenlagerfrei, d.h. ohne das Erfordernis der Lagerung einer Welle.

Mittels der Erfindung können insbesondere Schwenk- und/oder Drehbewegungen (nachfolgend der Kürze wegen meist nur als "Drehbewegung(en)" bezeichnet) realisiert werden.

Es ist möglich, dass der Kerbengrund und der Stirnbereich zum Eingriff miteinander ausgebildet sind, insbesondere so, dass der Stirnbereich an dem Kerbengrund abstützbar ist oder umgekehrt.

Vorzugsweise wird zwischen dem Kerbengrund und dem Stirnbereich eine Drehbewegung realisiert. Es ist möglich, dass mittels des vorzugsweise linienförmigen Kontaktbereichs zwischen Kerbengrund und Stirnbereich eine Dreh- und/oder Schwenkachse definiert wird (nachfolgend der Kürze wegen meist nur als "Drehachse(n)" bezeichnet). Somit ist es möglich, dass die bewegliche Wirkverbindung, insbesondere die Drehbewegung um eine mittels des Stirnbereichs und des Kerbengrunds definierte Achse und/oder Auflagelinie erfolgt. Dadurch kann vorteilhaft die Reibung zwischen dem Kerbengrund und dem Stirnbereich reduziert werden.

Es ist möglich, dass das zumindest eine Eingriffsteil eine Schneide ist, die z.B. als lineare Schneide oder Schneidrolle ausgebildet sein kann. Vorzugsweise läuft das zumindest eine Eingriffsteil zum Stirnbereich hin spitz zu, um den Stirnbereich kantig und/oder spitz auszubilden. Somit ist der Stirnbereich vorzugsweise kantig (insbesondere scharfkantig, rundkantig und/oder spitz) ausgebildet und/oder stellt die Spitze des zumindest einen Eingriffsteils dar.

Vorzugsweise läuft die zumindest eine Kerbe zum Kerbengrund hin spitz zu, um den Kerbengrund insbesondere spitz und/oder innenkantig (z.B. innenrundkantig, innenscharfkantig und/oder spitz) auszubilden. Somit ist der Kerbengrund vorzugsweise innenkantig (insbesondere innenrundkantig, innenscharfkantig und/oder spitz) ausgebildet.

Der Öffnungswinkel der zumindest einen Kerbe kann größer, kleiner oder gleich 90° sein.

Vorzugsweise ist das zumindest eine Eingriffsteil keilartig ausgebildet, kann aber auch wie weiter unten beschrieben rollen- oder bogenartig ausgebildet sein.

Es ist möglich, dass das Eingriffsteil bzw. der Stirnbereich und/oder die zumindest eine Kerbe bzw. der Kerbengrund geradlinig oder kreis- bzw. kreisbogenförmig ausgebildet ist.

Vorzugsweise ist mindestens eine Seitenfläche des zumindest einen Eingriffsteils (vorzugsweise beide) und/oder mindestens eine Seitenfläche der zumindest einen Kerbe (vorzugsweise beide) zur Kontaktvermeidung insbesondere konkav ausgespart.

Es ist möglich, dass mehrere Kerben, die jeweils einen Kerbengrund aufweisen, und mehrere Eingriffsteile, die jeweils einen Stirnbereich aufweisen, bereitgestellt sind, wobei ein oder mehrere Kerbengründe zur beweglichen Wirkverbindung mit einem oder mehreren Stirnbereichen vorgesehen sind.

Es ist möglich, dass mehrere Kerbengründe und mehrere Stirnbereiche zur wechselnden beweglichen Wirkverbindung miteinander ausgebildet sind, wobei z.B. eine bewegliche Wirkverbindung eines Kerbe-Eingriffsteil-Paars gelöst und mittelbar oder unmittelbar in eine bewegliche Wirkverbindung eines anderen Kerbe-Eingriffsteil-Paars übergeht.

Es ist möglich, dass mehrere Kerben und mehrere Eingriffsteile an einem ersten Tragteil und/oder mehrere Kerben und mehrere Eingriffsteile an zumindest einem zweiten Tragteil angeordnet sind.

Insbesondere können die Kerbengründe des ersten Tragteils zur beweglichen Wirkverbindung mit den Stirnbereichen des zweiten Tragteils vorgesehen sein, und die Kerbengründe des zweiten Tragteils können zur beweglichen Wirkverbindung mit den Stirnbereichen des ersten Tragteils vorgesehen sein, wodurch wechselnde bewegliche Wirkverbindungen realisierbar sind, wenn zumindest eines der Tragteile relativ zu dem anderen der Tragteile bewegt wird.

Es ist möglich, dass mehrere Kerben und mehrere Eingriffsteile in zumindest einer linearen Anordnung (z.B. an einer oder mehreren geradlinig verlaufenden Stangen) positioniert sind. Es ist aber auch möglich, dass mehrere Kerbengründe und mehrere Stirnbereiche in zumindest einer kreis- bzw. kreisbogenförmigen Anordnung (z.B. an einem kreisförmigen Teil, einem kreisbogenförmigen Teil) und/oder einem Hohlrad positioniert sind.

Es ist möglich, dass das erste Tragteil und/oder das zweite Tragteil zumindest eine Stange und/oder zumindest ein kreis- bzw. kreisbogenförmigen Teil umfasst. Ebenso kann das erste Tragteil und/oder das zweite Tragteil ein Hohlrad umfassen.

Der eine oder die mehreren Kerbengründe und der eine oder die mehreren Stirnbereiche können so ausgebildet und angeordnet werden, dass zumindest eines von Folgenden geschaffen wird: zumindest ein Gelenk (z.B. ein Dreh- bzw. Schwenkgelenk, ein Kardan-Gelenk, etc.), zumindest ein Getriebe (z.B. ein Planetengetriebe, ein Stangen-Drehteil-Getriebe, ein Drehteil-Drehteil-Getriebe, etc.), zumindest ein Lager, zumindest eine Führung.

Es ist möglich, dass sich ein insbesondere drehendes Tragteil zwischen wechselnden Wirkverbindungen auf einer aus Kreisbögen zusammengesetzten Bewegungsbahn bewegt und/oder eine Auf- und Abbewegung quer zur Fortbewegungsrichtung erfährt.

Vorzugsweise sind mehrere Kerben und mehrere Eingriffsteile über den gesamten Umfang des kreisförmigen Teils verteilt angeordnet. Es ist aber auch möglich, dass die mehreren Eingriffsteile und die mehreren Kerben vorzugsweise nur über einen Teil des Umfang des kreisförmigen Teils verteilt angeordnet sind bzw. an einem kreisbogenförmigen Teil angeordnet sind. Es wird ersichtlich, dass im Rahmen der Erfindung vorteilhaft Drehungen über mehr als 360° möglich, aber nicht zwingend erforderlich sind.

Es ist möglich, dass die mehreren Kerben und die mehreren Eingriffsteile so ausgebildet und angeordnet sind, dass ein Gelenk der Kardan-Art geschaffen wird bzw. dessen Funktion erfüllt wird, z.B. indem ein Kerbe-Eingriffsteil-Paar winklig ausgerichtet über einem anderen Kerbe-Eingriffsteil-Paar angeordnet ist.
Ebenso ist es möglich, dass die zumindest eine Kerbe und das zumindest eine Eingriffsteil so ausgebildet und angeordnet sind, dass eine Schaukel- bzw. Drehgelenkanordnung geschaffen wird.
Es ist möglich, dass zumindest eine Kerbe-Eingriffsteil-Anordnung vorgesehen ist, die quer (umfassend jedwede geeignete winklige Ausrichtung) zu zumindest einer anderen Kerbe-Eingriffsteil-Anordnung ausgerichtet ist, um eine vorzugsweise seitliche Lagesicherung bzw. Stabilisierung für die andere Kerbe-Eingriffsteil-Anordnung zu schaffen.
Vorzugsweise ist die die Lagesicherung schaffende Kerbe-Eingriffsteil-Anordnung ein als Rolle ausgebildetes Eingriffsteil, das vorzugsweise entlang eines Kerbengrunds eine Rollbewegung realisiert.
Die Vakuumanlage ist insbesondere eine Einrichtung zur Molekularstrahlepitaxie und/oder zum Bedampfen eines Substrats mit einem Verdampfungsmaterial, die eine wie hierin beschriebene Vorrichtung umfasst.

Die Vorrichtung ist vorzugsweise in der Kammer angeordnet, zweckmäßig mit Ausnahme des unten genannten Wirkmittels, das insbesondere außerhalb der Kammer angeordnet sein kann. Die Heizeinrichtung kann innerhalb oder außerhalb der Kammer angeordnet sein.

Das Wirkmittel kann magnetisch sein und die Vorrichtung bzw. das der Vorrichtung zugeordnete Funktionsteil kann magnetisierbar sein oder umgekehrt. Es ist aber auch möglich, dass das Wirkmittel und die Vorrichtung bzw. das der Vorrichtung zugeordnete Funktionsteil magnetisch sind. Es können auch z.B. elektromagnetische Felder, elektrostatische Felder und/oder die Schwerkraft eingesetzt werden. Bei den Feldern kann es sich um (insbesondere elektromagnetische) Wanderfelder handeln. Das Wirkmittel arbeitet somit insbesondere mittels fernwirkenden Kräften.
Das Wirkmittel kann linear und/oder kreisbogenförmig bewegbar sein.

Es ist möglich, dass das Wirkmittel so ausgebildet und angeordnet ist, dass ein Andruck zwischen zumindest einem Kerbengrund und zumindest einem Stirnbereich, die eine bewegliche Wirkverbindung miteinander ausbilden, erzeugt wird, wodurch ein ungewolltes Lösen der beweglichen Wirkverbindung vermeidbar ist.

Die Vorrichtung kann z.B. ein Funktionsteil aufweisen, das vorzugsweise mittels der zumindest einen Kerbe und dem zumindest einen Eingriffsteil so beweglich (z.B. verschiebbar, drehbar und/oder verschwenkbar) ist, dass es zweckmäßig von einer Ausgangsposition in vorbestimmter Weise und/oder reproduzierbar in eine Zielposition bringbar ist und/oder umgekehrt. Es ist möglich, dass die zumindest eine Kerbe und das zumindest eine Eingriffsteil zur reproduzierbaren und insbesondere zieldefinierten Positionierung des Funktionsteils dienen.

Das Funktionsteil kann z.B. um mindestens 30mm, 40mm, 50mm, 60mm, 80mm, 90mm, 100mm, 110mm oder 120mm verschiebbar sein. Alternativ oder ergänzend kann das Funktionsteil z.B. um mindestens 15°, 30°, 45°, 60°, 90°, 100°, 110°, 120° oder 150° verschwenkbar sein.

Die Verschwenkung im Rahmen der Erfindung umfasst insbesondere auch Drehbewegungen um jeden beliebigen Winkel, der zweckmäßig größer oder kleiner als 360° sein kann.

Es ist möglich, dass die Vorrichtung ein z.B. motorisch angetriebenes Wirkmittel umfasst, das zum (mittelbaren oder unmittelbaren) Antreiben des Funktionsteils ausgebildet ist, vorzugsweise berührungslos und/oder mittels einer fernwirkenden Kraft von außen durch eine Kammerwand hindurch. Vorzugsweise begrenzt die Kammerwand eine Kammer, wobei die Vorrichtung dann insbesondere Mittel zur Erzeugung eines Vakuums in der Kammer und/oder zum Heizen der Kammer umfasst.

Bei einer besonders bevorzugten Ausführungsform ist die Vorrichtung in der Kammer angeordnet, mit Ausnahme des vorzugsweise motorisch angetriebenen Wirkmittels, das außerhalb der Kammer positioniert ist, um von außen mittels einer fernwirkenden Kraft durch die Kammerwand hindurch in die Kammer hinein zu wirken, z.B. um - zweckmäßig wie oben beschrieben - das Funktionsteil von einer Ausgangsposition in eine Zielposition zu bringen und/oder um den Andruck zwischen zumindest einem Kerbengrund und zumindest einem Stirnbereich, die eine bewegliche Wirkverbindung miteinander ausbilden, zu erzeugen. Das Wirkmittel kann z.B. unmittelbar oder mittelbar, z.B. über ein Kopplungsstück, auf das Funktionsteil wirken.

Bei einer bevorzugten Ausführungsform umfasst das Funktionsteil eine Verschlusseinrichtung zweckmäßig zum Öffnen und Schließen einer Öffnung oder eine Proben- oder Substrattransferreinrichtung zweckmäßig zum Bewegen von Proben oder Substraten.

Die Vorrichtung kann außerdem zumindest eine Nothalterung umfassen, die dafür sorgt, dass sich die bewegliche Wirkverbindung zwischen Stirnbereich und Kerbengrund oder allgemein die Kerbe-Eingriffsmittel-Anordnung nicht übermäßig lockert, z.B. wenn das Wirkmittel entfernt wird oder anderweitig ungenügend wirkt. Die Nothalterung kann so konfiguriert sein, dass sie ein bestimmtes Lockern zulässt, aber ein übermäßiges Lockern verhindert, das z.B. zu einem Blockieren, Verkanten oder sogar Auseinanderfallen führen würde.

Die oben beschriebenen Merkmale und bevorzugten Ausführungsbeispiele der Erfindung sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
- Fig. 1:: zeigt eine Schnittansicht durch eine Kerbe und ein Eingriffsteil gemäß einer Ausführungsform der Erfindung,
- Fig. 2:: zeigt eine Schnittansicht durch mehrere Kerben und mehrere Eingriffsteile gemäß einer Ausführungsform der Erfindung, wobei zwei drehbare Teile ineinander greifen,
- Fig. 3:: zeigt eine Schnittansicht durch mehrere Kerben und mehrere Eingriffsteile gemäß einer anderen Ausführungsform der Erfindung,
- Fig. 4:: zeigt eine schematische Seitenansicht mehrerer Kerben und mehrerer Eingriffsteile gemäß einer anderen Ausführungsform der Erfindung, wobei eine Stange und ein drehbares Teil ineinander greifen,
- Fig. 5:: zeigt eine Vorderansicht mehrerer Kerben und mehrerer Eingriffsteile gemäß einer anderen Ausführungsform der Erfindung, wobei zumindest ein in einer Kerbe rollbares Eingriffsteil zur seitlichen Lagesicherung anderer Kerbe-Eingriffsteil-Anordnungen angeordnet ist,
- Fig. 6:: zeigt eine Vorderansicht zur Ausbildung einer seitlichen Lagesicherung gemäß einer Ausführungsform der Erfindung,
- Fig. 7:: zeigt ein perspektivische Ansicht mehrerer Kerben und mehrerer Eingriffsteile zur Ausbildung eines Kardan-Gelenks gemäß einer Ausführungsform der Erfindung,
- Fig. 8:: zeigt eine schematische Schnittansicht mehrerer Kerben und mehrerer Eingriffsteile, die an einem Hohlrad und einem kreisförmigen Teil zum Eingriff mit dem Hohlrad angeordnet sind, gemäß einer Ausführungsform der Erfindung,
- Fig. 9:: zeigt eine schematische Schnittansicht mehrerer Kerben und mehrerer Eingriffsteile, die zur Ausbildung eines Getriebes der Planetengetriebe-Art an einem Hohlrad, drei Planetenrädern und einem Sonnerad angeordnet sind, gemäß einer Ausführungsform der Erfindung,
- Fig. 10:: zeigt eine perspektivische Ansicht eines Funktionsteils, das um eine durch zwei Kerbe-Eingriffsteil-Anordnungen definierte Drehachse drehbar ist, gemäß einer Ausführungsform der Erfindung,
- Fig. 11:: zeigt eine perspektivische Ansicht eines Funktionsteils, das um eine durch eine Kerbe-Eingriffsteil-Anordnung definierte Drehachse drehbar ist, gemäß einer Ausführungsform der Erfindung,
- Fig. 12:: zeigt eine perspektivische Ansicht von vier KerbenEingriffsteil-Anordnungen zur schaukelartigen Bewegung eines Funktionsteils gemäß einer Ausführungsform der Erfindung,
- Fig. 13:: zeigt eine perspektivische Ansicht mehrerer Kerben und mehrerer Eingriffsteile gemäß einer Ausführungsform der Erfindung, um eine quasilineare Bewegung eines Funktionsteils zu erzielen, und
- Fig. 14:: zeigt eine Schnittansicht durch ein Drehlager gemäß einer Ausführungsform der Erfindung.

Die nachstehend beschriebenen Ausführungsformen stimmen teilweise überein, wobei ähnliche oder identische Teile mit dem gleichen Bezugszeichen versehen sind, und zu deren Erläuterung auch auf die jeweilige Beschreibung anderer Ausführungsformen verwiesen wird, um Wiederholungen zu vermeiden.

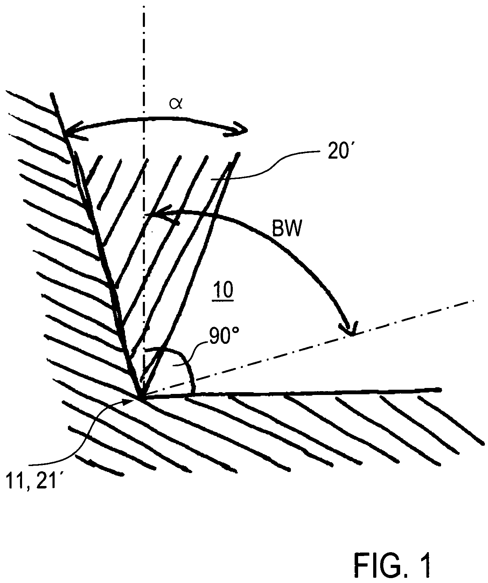

Figur 1 zeigt eine Schnittansicht durch eine Kerbe 10, die einen Kerbengrund 11 aufweist, und ein Eingriffsteil 20', das einen Stirnbereich 21' aufweist. Der Stirnbereich 21' und der Kerbengrund 11 stehen miteinander in Eingriff und bilden eine linienförmig verlaufende, bewegliche Wirkverbindung.

Das Eingriffsteil 20' ist schneid- oder keilförmig (im Wesentlichen V-förmig) ausgebildet, weshalb es auch als Schneide bezeichnet werden kann. Das Eingriffsteil 20' ist zum Stirnbereich 21' hin spitz laufend, wodurch ein spitzer oder scharfkantiger Stirnbereich 21'erzeugt wird.

Die Kerbe 10 ist keilförmig (im Wesentlichen V-förmig) ausgespart und zum Kerbengrund 11 hin spitz zulaufend, wodurch ein spitzer oder innenkantiger Kerbengrund 11 erzeugt wird.

Wie aus Figur 1 ersichtlich wird, kann zwischen dem Kerbengrund 11 und dem Stirnbereich 21' eine Schwenk- bzw. Drehbewegung BW realisiert werden. Ferner wird ersichtlich, dass mittels eines im Wesentlichen linienförmigen Kontaktbereichs zwischen Kerbengrund 11 und Stirnbereich 21' eine Schwenk- bzw. Drehachse definiert wird, um die sich das Eingriffsteil 20' bewegen kann.

Bei der in Figur 1 gezeigten Ausführungsform (Eingriffsteil drehbar - Kraft entlang der Symmetrieebene des Eingriffsteils) ist der Winkelbereich BW der Drehung auf 90° - α/2 eingeschränkt, wobei α der Eingriffsteilwinkel ist. Wird der Kerbenwinkel über 90° + α/2 erhöht, wirkt am Ende des Schwenkbereichs eine Kraftkomponente parallel zur Seitenfläche der Kerbe, die vom Kerbengrund 11 weg weist und somit zum Herausgleiten des Eingriffsteils 20' aus der Kerbe 10 führen würde.

Die in Figur 1 gezeigte Kerbe-Eingriffsteil-Anordnung kann z.B. als Gelenk und/oder Lager dienen.

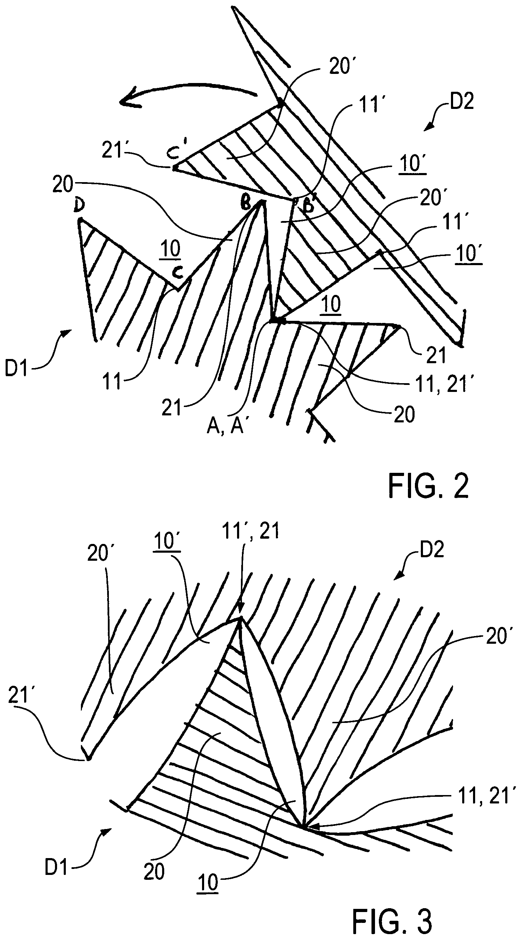

Figur 2 zeigt eine Schnittansicht durch mehrere Kerben 10 und 10' und mehrere Eingriffsteile 20 und 20' gemäß einer Ausführungsform der Erfindung, um eine drehende Bewegung in eine gegensinnige drehende Bewegung umzuwandeln.

Die Kerben 10 und die Eingriffsteile 20 sind an einem ersten drehbaren Teil (Tragteil) D1 angeordnet, und die Kerben 10' und die Eingriffsteile 20' sind an einem zweiten drehbaren Teil (Tragteil) D2 angeordnet. Die beiden drehbaren Teile D1, D2 können kreis- oder kreisbogenförmig ausgebildet sein. Die Kerben 10 und die Eingriffsteile 20 können in einer kreisförmigen Anordnung oder einer kreisbogenförmigen Anordnung platziert sein. Gleiches gilt entsprechend für die Kerben 10' und die Eingriffsteile 20' des zweiten drehbaren Teils D2.

Es wird ersichtlich, dass die Kerbengründe 11 des ersten drehbaren Teils D1 und die Stirnbereiche 21' des zweiten drehbaren Teils D2 zur beweglichen Wirkverbindung miteinander vorgesehen sind und die Kerbengründe 11' des zweiten drehbaren Teils D2 und die Stirnbereiche 21 des ersten drehbaren Teils D1 zur beweglichen Wirkverbindung miteinander vorgesehen sind, was zu wechselnden beweglichen Wirkverbindungen führt.

Aus einem Vergleich der Figuren 1 und 2 wird ersichtlich, dass für Drehbewegungen, die einen Winkelbereich von mehr als 90° - α/2 erfordern, z.B. mehrere Kerbe-Eingriffsteil-Anordnungen gegensinnig aneinandergereiht werden können.

Wie aus Figur 2 ferner ersichtlich wird, geht die Drehbewegung um eine bewegliche Wirkverbindung (Gewindegrund-Stirnbereich-Eingriff) A-A' am Ende des Drehwinkels des zugeordneten Eingriffsteils in eine Drehbewegung um die nächste bewegliche Wirkverbindung (Gewindegrund-Eingriffsteil-Eingriff) B-B' über und so weiter (C-C'). Die beweglichen Wirkverbindungen und/oder die Drehachsen wandern also von A-A' über B-B' nach C-C' usw.. Um dies zu ermöglichen, sind die Öffnungswinkel der Kerben 10, 10' größer als 90°.

Bei ebenen Seitenflächen der Kerben 10, 10' und der Eingriffsteile 21, 21' können z.B. auf Grund von Fertigungstoleranzen ungewollte Auswölbungen der Seitenflächen auftreten. Diese können nachteilig zu einer tangentialen Kraft in Bezug auf die Drehachse auf die Stirnfläche bei einer Übergabe führen, was zu einem ungewollten seitlichem Gleiten und damit Reibung und Abnutzung führt. Dieser nachteilige Effekt kann reduziert oder vermieden werden, indem zumindest eine Seitenfläche der Kerben 10, 10' und/oder zumindest eine Seitenfläche des Eingriffsteils 20, 20' vorzugsweise konkav ausgespart wird, wie in Figur 3 gezeigt. Eine wie in Figur 3 zu sehende konkave Aussparung der Seitenflächen ergibt auch eine gewisse Toleranz gegenüber Verunreinigungen wie Ablagerungen und Partikel, die dann wiederum nicht zu einer Schiebebewegung der Eingriffsteile senkrecht zur Dreh- oder Schwenkachse und der damit verbundenen Abnutzung führen können.

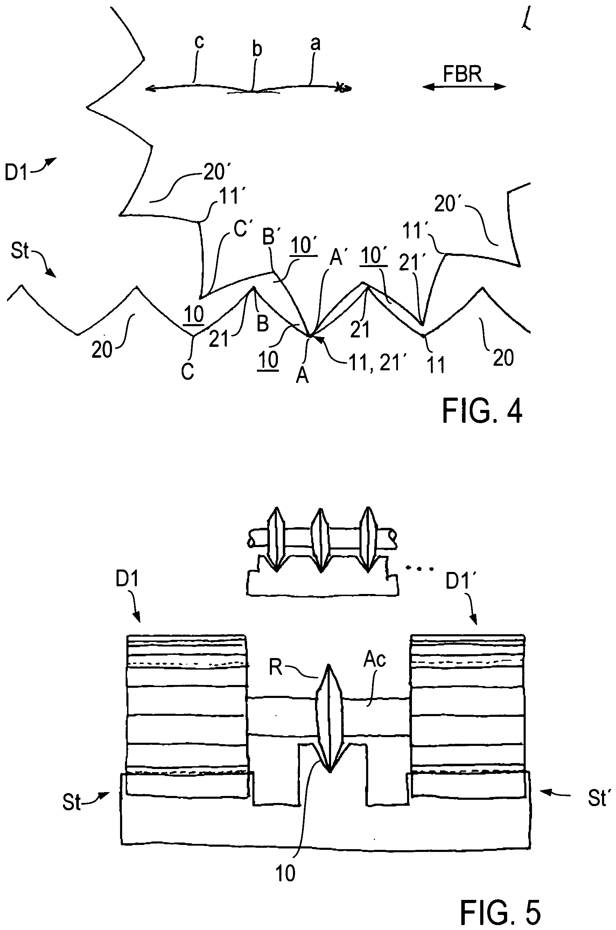

Figur 4 zeigt eine schematische Seitenansicht mehrerer Kerben 10, 10' und mehrerer Eingriffsteile 20, 20' gemäß einer anderen Ausführungsform der Erfindung.

Die Kerben 10 und die Eingriffsteile 20 sind an einer Stange (Tragteil) St in einer linearen Anordnung positioniert. Die Kerben 10' und die Eingriffsteile 20' sind an einem drehbaren Teil (Tragteil) D1 in einer kreis- oder kreisbogenförmigen Anordnung positioniert.

Es wird ersichtlich, dass die Kerbengründe 11 der Stange St und die Stirnbereiche 21' des drehbaren Teils D1 zur beweglichen Wirkverbindung miteinander vorgesehen sind und die Kerbengründe 11' des drehbaren Teils D1 und die Stirnbereiche 21 der Stange St zur beweglichen Wirkverbindung miteinander vorgesehen sind, was zu wechselnden beweglichen Wirkverbindungen führt, wenn das drehbare Teil D1 relativ zu der Stange St bewegt wird oder umgekehrt.

Bei einer Bewegung von links nach rechts in Figur 4 geht eine bewegliche Wirkverbindung zwischen Stirnbereich A' (21') und Kerbengrund A (11) in eine bewegliche Wirkverbindung zwischen Kerbengrund B' (11') und Stirnbereich B (21) über, die wiederum in eine bewegliche Wirkverbindung zwischen Stirnbereich C' (21') und Kerbengrund C (11) übergeht, usw. oder umgekehrt.

Die der in Figur 4 gezeigten Ausführungsform zu Grunde liegende Idee ist hier wie beim Kugellager eine rollende Bewegung zur Minimierung der Reibung. Im Unterschied dazu bewirkt die Kerbe-Eingriffsteil-Anordnung der Figur 4 jedoch eine definierte Positionierung des drehbaren Teils D1 entlang der Stange St.

Im Gegensatz zum klassischen Zahnrad, das auf einer geradlinigen Achse läuft und sich damit um den Achsenmittelpunkt dreht, dreht sich das drehbare Teil D1 um die wechselnden Wirkverbindungen, also um die wechselnden mittels der Kerbengründe 11, 11' und der Stirnbereiche 21, 21' definierten Drehachsen, wodurch der Mittelpunkt des drehbaren Teils D1 keine lineare Bewegungsbahn beschreibt, sondern einer aus Kreisbögen zusammengesetzten Bewegungsbahn a - b - c folgt, wodurch es eine Auf- und Abbewegung quer zur Fortbewegungsrichtung FBR erfährt.

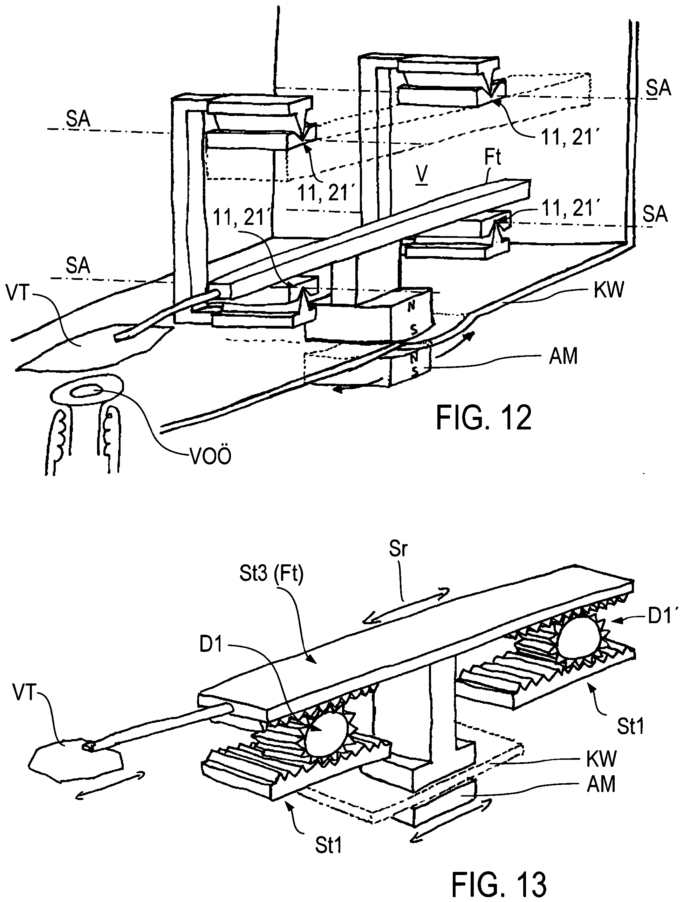

Es wird ersichtlich, dass die mittels der Erfindung erzielbare geringe oder fehlende Reibung durch eine nicht geradlinige Bewegung eines Tragteils ermöglicht werden kann. Um eine geradlinige oder quasilineare Bewegungsbahn zu erzeugen, kann jedoch z.B. eine zweite Stange auf dem drehbaren Teil D1 angeordnet werden, wie z.B. in Figur 13 gezeigt. Eine Reduzierung der Auf- und Abbewegung kann dabei erzielt werden, wenn eine ungeradzahlige Anzahl von Eingriffsteilen 20' für das drehbare Teil D1 verwendet wird, wodurch ein Eingriffsteil 20' des drehbaren Teils D1 jeweils einer Kerbe 10' auf der anderen Seite des drehbaren Teils D1 gegenüberliegt. Eine zweite Stange (in Figur 4 nicht zu sehen - siehe aber prinzipiell Figur 13), die gegenüberstehend der Stange St angeordnet werden kann, führt dadurch eine geringere Auf- und Abbewegung aus, was eine im Wesentlichen lineare Bahnbewegung ermöglicht.

Unter erneuter Bezugnahme auf Figur 4 wird ferner ersichtlich, dass sich die Amplitude der lateralen Bewegung der Rollen bzw. des drehbaren Teils D1 durch größere Öffnungswinkel der Kerben/Eingriffsteile bzw. eine feinere Zahnung, d.h. durch die Höhe der Kerben/Eingriffsteile, reduzieren lässt.

Zu erwähnen ist, dass die radiale Belastbarkeit (senkrecht zu einem Eingriffsteil bzw. der Dreh- oder Schwenkachse) und damit die Haltbarkeit sich durch die Länge der Kerben und/oder der Eingriffsteile variieren lässt. Lange Auflagelinien zwischen Kerbengrund und Stirnfläche führen zu erhöhter Belastbarkeit. Neben geometrischen Beschränkungen findet die Verlängerung der Auflagelinien ihre Grenze in der Elastizität der verwendeten Materialen, die sich unter Last verformen und damit eine gleichförmige Auflage verhindern können. Deswegen, und um Abrieb durch in einer Kerbe eingelagerte Verunreinigungen zu minimieren, sollten die Eingriffsteile und Kerben bzw. die Kerben ausbildenden Teile aus einem möglichst harten Material gefertigt werden, z.B. Metall, Keramik, Glas, etc., sofern sie die Ausbildung der erforderlich scharfen Stirnbereiche und ggf. Kerbengründe erlauben.

Die Halterung und der Antrieb des drehbaren Teils D1, wie in Figur 4 gezeigt, prinzipiell aber auch der Tragteile aus den vorigen Figuren, kann mittels eines als Antriebsmittel ausgebildeten Wirkmittels erfolgen, das fernwirkend und berührungslos auf das magnetische oder magnetisierbare drehbare Teil D1 einwirken kann. Mittels des Antriebsmittels kann ferner ein Andruck zwischen einem Kerbengrund 11, 11' und einem Stirnbereich 21, 21', die eine bewegliche Wirkverbindung miteinander ausbilden, erfolgen. In speziellen Fällen kommen ergänzend oder alternativ zu Magnetismus auch andere fernwirkende Kräfte in Betracht, insbesondere die Schwerkraft oder z.B. elektrostatische Felder.

Figur 5 zeigt eine Vorderansicht mehrerer Kerben und mehrerer Eingriffsteile gemäß einer anderen Ausführungsform der Erfindung.

In Figur 5 unten sind zwei drehbare Teile D1 und D1' mittels einer Achse Ac drehfest verbunden. Das drehbare Teil D1 greift in eine Stange St ein und das drehbare Teil D1' greift in eine Stange St' ein. An der Achse Ac ist ferner ein als Rolle R ausgebildetes Eingriffsteil drehfest angeordnet. Die Rolle R ist zwischen den zwei drehbaren Teilen D1, D1' positioniert und vorgesehen, um in einer Führungskerbe 10 entlang der Längskerbe 10 zu rollen. Wie in Figur 5 zu sehen ist, ist die Rolle R durch die kerbenbegrenzenden Teile der Längskerbe 10 seitlich führbar. Die Rolle R ist quer zu den Kerben und Eingriffsteilen der zwei drehbaren Teile D1, D1' angeordnet, um so eine Führung und seitliche Stabilisierung bzw. Lagesicherung für die zwei drehbaren Teile D1, D1' zu schaffen. Wie in Figur 5 oben gezeigt, ist es auch möglich, mehrere Rollen-Längskerben-Anordnungen vorzusehen.

Der Durchmesser der Rolle R entspricht vorzugsweise dem Kreisdurchmesser der Kerbenpositionen bzw. der Kerbengründe an den drehbaren Teilen D1, D1'. Durch die nichtlineare Bewegung der Rolle R (die durch eine wie oben beschriebene Auf- und Abwärtsbewegung erzeugt wird) entlang der Führungskerbe 10 berührt die Rolle R den Kerbengrund der Längskerbe 10 (nur) intermittierend. Die Rolle R und die Längskerbe 10 sollten im Vergleich zu den Eingriffsteilen und Kerben der drehbaren Teile D1, D1' und der Stangen St, St' spitzwinkliger ausgebildet werden, um eine bestmögliche seitliche Führung zu gewährleisten. Vorzugsweise ist der Öffnungswinkel der Längskerbe 10 nur unwesentlich größer als der in die Längskerbe 10 geführte Schneidwinkel der Rolle R.

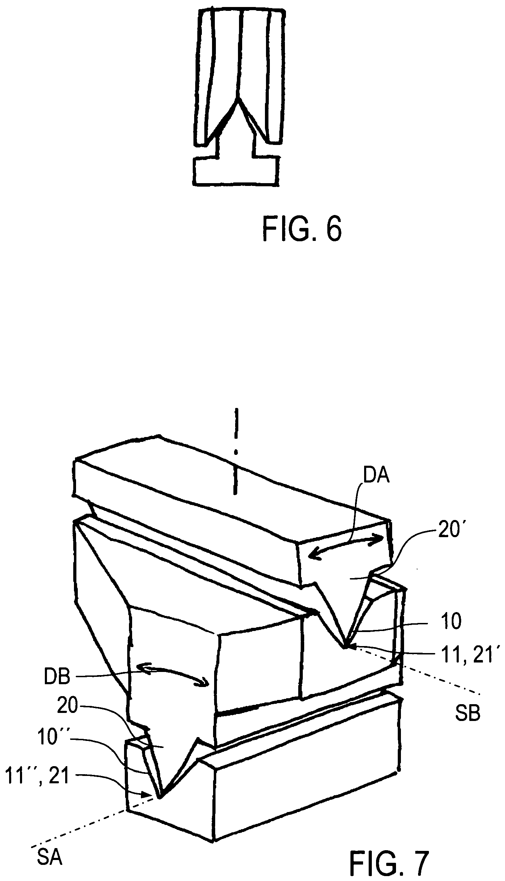

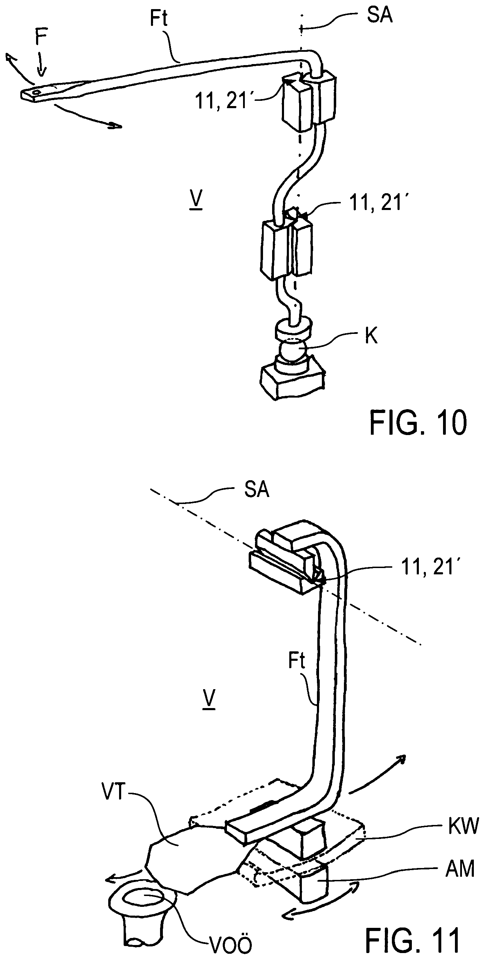

In Figur 6 ist eine schematische Draufsicht auf eine seitlichen Führung für Einzelkerbe-Einzeleingriffsteil-Gelenke gezeigt. Das Konstruktionsprinzip der seitlichen Führung mittels einer Rolle-Kerbe-Anordnung lässt sich analog auf die seitliche Führung von Kerbe-Eingriffsteil-Gelenken mit nur einer Dreh- oder Schwenkachse ("Einzeleingriffsteil in Einzelkerbe"; siehe z.B. Figur 11) zurückübertragen. Eine solche Führung ist in Figur 6 dargestellt. Eine Seite der Führung wird als gerades Eingriffsteil ausgebildet. Die andere Seite bildet eine im Wesentlichen V-förmige von dem Eingriffsteil weggeknickte Kerbe. Somit ist der Kontaktpunkt, der zur Führung dient, nun ein Sattelpunkt, was zu einer robusten Ausführung führt.

Figur 7 zeigt ein perspektivische Ansicht von zwei Kerben 10 und 10" und zwei Eingriffsteilen 20 und 20', die so ausgebildet und angeordnet sind, dass ein Kardan-Gelenk bzw. dessen Funktion erzielt wird. Dies wird erreicht, indem zwei übereinander platzierte Kerben-Eingriffsteil-Anordnungen in einem bestimmten Winkel zueinander ausgerichtet werden, um Bewegungen um zwei nicht-parallele Dreh- oder Schwenkachsen zu erzielen.

Die Kerbe 10 weist einen Kerbengrund 11 auf und das Eingriffsteil 20' weist einen Stirnbereich 21' auf, wobei der Kerbengrund 11 und der Stirnbereich 21' zur beweglichen Wirkverbindung miteinander ausgebildet sind, um eine Dreh- oder Schwenkbewegung DA um eine Dreh- oder Schwenkachse SB zu ermöglichen.

Die Kerbe 10" weist einen Kerbengrund 11" auf und das Eingriffsteil 20 weist einen Stirnbereich 21 auf, wobei der Kerbengrund 11" und der Stirnbereich 21 zur beweglichen Wirkverbindung miteinander ausgebildet sind, um eine Dreh- oder Schwenkbewegung DB um eine weitere Dreh- oder Schwenkachse SA zu ermöglichen. Die Drehachse SB und die Drehachse SA sind vorzugsweise rechtwinklig zueinander ausgerichtet, können aber unter jedem gewünschten Winkel zueinander ausgerichtet werden. Es wird ersichtlich, dass die in Figur 7 zu sehende Anordnung für Bewegungen in zwei voneinander linear unabhängigen Dreh- oder Schwenkrichtungen geeignet ist.

Das Zwischenstück, an dem die Kerbe 10 und das schräg dazu ausgerichtete Eingriffsteil 20 vorgesehen sind, stabilisiert sich durch den Eingriff Stirnbereich 21' - Kerbengrund 11 und den schräg dazu angeordneten Eingriff Stirnbereich 21 - Kerbengrund 11" selbst und muss nicht zusätzlich seitlich lagegesichert werden. Das Zwischenstück kann offensichtlich sowohl zwei Kerben, zwei Eingriffsteile oder jeweils ein Eingriffsteil und eine Kerbe umfassen. Soll das Eingriffsteil 20' selbst durch das Kardangelenk geführt werden, können beide Gelenke wiederum durch seitliche Führungen gemäß Figur 5 bzw. 6 geführt werden.

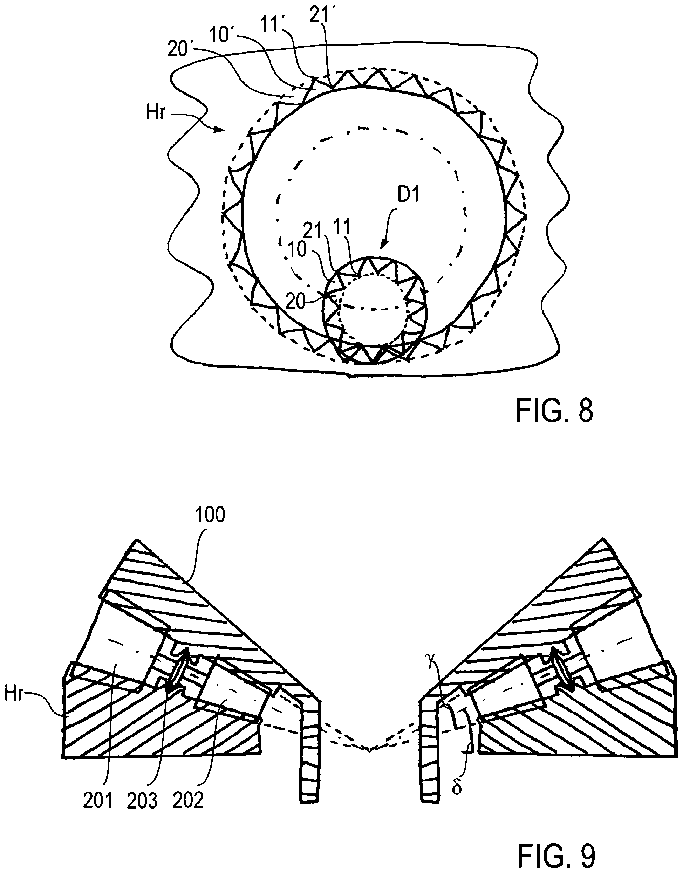

Figur 8 zeigt eine schematische Schnittansicht mehrerer Kerben 10 und mehrerer Eingriffsteile 20, die an einem drehbaren Teil D1 angeordnet sind, und mehrerer Kerben 10' und mehrerer Eingriffsteile 20', die an einem Hohlrad Hr wie üblich innenliegend angeordnet sind.

Es wird ersichtlich, dass die bereits unter Bezugnahme auf insbesondere die Figuren 2 bis 5 beschriebenen Bewegungen eines drehbaren Teils auch entlang gebogener Bahnen wie z.B. einem Hohlrad erfolgen können.

In einem einfachen wie in Figur 8 gezeigten Ausführungsbeispiel ergibt sich daraus eine Anordnung aus zwei drehbaren Teilen, z.B. dem größeren Hohlrad Hr, in dem das kleinere drehbare Teil D1 fortbewegt wird. Dabei ergibt sich jedoch das Problem, dass sich der Mittelpunkt des inneren drehbaren Teils D1 im Wesentlichen auf einer Kreisbahn bewegt. Diese Kreisbahn hat einen kleinen Durchmesser, wenn sich die Durchmesser des inneren drehbaren Teils D1 und des Hohlrads Hr nur wenig unterscheiden. Dann ist allerdings auch die Drehgeschwindigkeit des inneren drehbaren Teil D1 im Verhältnis zur Umlaufgeschwindigkeit im Hohlrad Hr gering. Ist das innere drehbare Teil D1 klein, dreht es sich schneller im Verhältnis zur Umlaufgeschwindigkeit, bewegt sich jedoch auf einer größeren Kreisbahn. Solche Getriebe mit nur einem drehbaren Teil kommen insbesondere für Anwendungsformen in Betracht, in denen entweder die Drehgeschwindigkeit niedrig sein soll, oder es nicht auf eine Drehung in der Nähe einer Symmetrieachse ankommt.

Vorteilhafter ist ein sozusagen vollständiges Planetengetriebe, wie z.B. in der Schnittansicht der Figur 9 gezeigt, das ein Sonnenrad 100, drei Planetenräder, bestehend aus jeweils drei drehfest miteinander verbundenen Drehteilen (vorzugsweise zwei konische Teile 201 und 202 und insbesondere ein als Rolle ausgebildetes Teil 203), und ein Hohlrad Hr aufweist. Die drei Drehteile 201, 202, 203 sind wie in Figur 5 mittels einer Achse drehfest miteinander verbunden. Vorzugsweise sind drei Planetenräder, jeweils umfassend die drei Drehteile 201, 202, 203, über den Umfang des Planetengetriebes um 120° versetzt angeordnet.

Das Sonnenrad 100 umfasst mehrere Kerben mit jeweils einem Kerbengrund und mehrere Eingriffsteile mit jeweils einem Stirnbereich. Das Drehteil 201 umfasst mehrere Kerben mit jeweils einem Kerbengrund und mehrere Eingriffsteile mit jeweils einem Stirnbereich. Das Drehteil 202 umfasst mehrere Kerben mit jeweils einem Kerbengrund und mehrere Eingriffsteile mit jeweils einem Stirnbereich. Das Hohlrad Hr umfasst mehrere Kerben mit jeweils einem Kerbengrund und mehrere Eingriffsteile mit jeweils einem Stirnbereich. Das Drehteil 203 ist als Rolle ausgebildet und greift in eine umlaufende Kerbe in dem Sonnenrad 100 und eine umlaufende Kerbe in dem Hohlrad Hr ein.

Die drei Planetenräder, die jeweils die drei Drehteile 201, 202, 203 umfassen, stehen jeweils sowohl mit dem Sonnenrad 100 als auch mit dem Hohlrad Hr in Eingriff, wie bei herkömmlichen Planetengetrieben üblich.

Bei dem in Figur 9 gezeigten Planetengetriebe dreht sich das Sonnenrad 100 nahezu perfekt auf einer festen Achse. Mittels der drei Planetenräder kann eine sichere Führung des Sonnenrads 100 gewährleistet bzw. die drei Planetenräder, die jeweils aus den drei Drehteilen 201, 202, 203 bestehen, im Wesentlichen gleich belastet werden. Das Sonnenrad 100 kann eine axiale Bohrung aufweisen, durch welche zusätzliche Funktionsteile montiert werden können (z.B. je nach Bestimmungszweck mechanische Befestigungen, Heizungen usw.).

Der Verjüngungswinkel γ der konischen Drehteile 201, 202 und der Winkel δ (Anstellwinkel der Rotationsachsen zur Drehebene) werden vorzugsweise so gewählt, dass sich die Gewichtskräfte (und eventuelle Zusatzkräfte, z.B. verursacht durch eine magnetische Kopplung oder allgemein durch einen Antrieb) des Sonnenrades 100 und der Planetenräder dergestalt ausgleichen, dass auf die Kerbe-Eingriffsteil-Anordnungen der Planetenräder bzw. Drehteile 201, 202, 203 im Wesentlichen keine axialen Kräfte wirken und somit die radialen Führungen keine Kräfte aufnehmen müssen.

Figur 10 zeigt eine perspektivische Ansicht eines ersten Gelenks und eines zweiten Gelenks. Das erste Gelenk wird durch eine erste Kerbe-Eingriffsteil-Anordnung ausgebildet, deren Kerbengrund 11 und deren Stirnbereich 21' zur beweglichen Wirkverbindung miteinander ausgebildet sind. Das zweite Gelenk wird durch eine zweite Kerbe-Eingriffsteil-Anordnung ausgebildet, deren Kerbengrund 11 und deren Stirnbereich 21' zur beweglichen Wirkverbindung miteinander ausgebildet sind. Die beiden beweglichen Wirkverbindung definieren eine Drehachse SA. Das erste Gelenk und das zweite Gelenk sind so ausgebildet und angeordnet, dass ein an einer Kugel K gelagertes Funktionsteil Ft um die durch die zwei Gelenke definierte Drehachse SA schwenkbar ist.

Die in Figur 10 gezeigte Ausführungsform ist besonders geeignet für Schwenkarme, die sich um geradlinige, vorzugsweise vertikale Achsen SA drehen und in Achsrichtung, vorzugsweise axialer Richtung belastet werden, z.B. um Proben- oder Substrattransfers in Vakuumanlagen oder Einrichtungen zur Molekularstrahlepitaxie und/oder zum Bedampfen eines Substrats mit einem Verdampfungsmaterial durchzuführen. Dabei kann wie ersichtlich aus Figur 10 für die axiale Führung bzw. Lagerung die Kugel K verwendet werden. Der Einfachheit halber sind in Figur 10 die Gelenke als Einzelkerbe-Einzeleingriffsteil-Anordnung gezeigt, wobei die Anwendung von Mehrfachgelenken für Schwenkungen bzw. Drehungen über 90° ebenso möglich ist. Die Kerbe-Eingriffsteil-Anordnung des ersten Gelenks ist vorzugsweise gegensinnig zu der Kerbe-Eingriffsteil-Anordnung des zweiten Gelenks ausgerichtet, wodurch sie bei Belastung des Schwenkarms in Achsrichtung, also in Figur 10 nach unten, belastet werden. Für eine umgekehrte Belastung des Arms können die Gelenke entsprechend vertauscht werden. Der in Figur 10 gezeigte Aufbau befindet sich vorzugsweise in einer Vakuumkammer zur Ausbildung eines Vakuums V.

Figur 11 zeigt eine perspektivische Ansicht, in der eine Kerbe-Eingriffsteil-Anordnung zu sehen ist, die mittels eines Kerbengrunds 11 und eines Stirnbereichs 21' eine Drehachse SA definiert. Ein Funktionsteil Ft, an dem ein Verschlussteil VT ausgebildet ist, ist an der Kerbe-Eingriffsteil-Anordnung gelenkig gehalten. Die Kerbe-Eingriffsteil-Anordnung ist als Pendel-Gelenk bzw. Pendel-Lagerung ausgebildet. In Figur 11 kann ferner eine Verdampferofenöffnung VOÖ gesehen werden, wobei das Verschlussteil VT zum Öffnen und Schließen der Verdampferofenöffnung VOÖ vorgesehen ist. Das Verschlussteil VT ist vorzugsweise als Verschlussblende ausgebildet. Bezugszeichen KW kennzeichnet eine Kammerwand KW, die ein Vakuum V begrenzt, während Bezugszeichen AM ein Antriebsmittel AM kennzeichnet, das außerhalb des Vakuums platziert ist und auf das Funktionsteil Ft berührungslos einwirkt, um dieses um die mittels des Kerbengrunds 11 und des Stirnbereichs 21' erzeugte bewegliche Wirkverbindung zu bewegen. Es wird ferner ersichtlich, dass wenn das Antriebsmittel AM das Funktionsteil Ft zu sich hin beaufschlagt, ein Andruck zwischen dem Kerbengrund 11 und dem Stirnbereich 21', die eine bewegliche Wirkverbindung miteinander ausbilden, erzeugt wird. Das Antriebsmittel AM auf der Luftseite bewegt sich vorzugsweise auf einer kreisbogenförmigen Bahn relativ zu der mittels der beweglichen Wirkverbindung zwischen dem Stirnbereich 21' und dem Kerbengrund 11 definierten Schwenkachse SA. Dafür kann auf der Luftseite eine entsprechende Führung für das Antriebsmittel AM vorgesehen werden. Es wird ersichtlich, dass das Antriebsmittel AM magnetisch und ein Teil des anzutreibenden Funktionsteils Ft magnetisierbar ausgebildet sein kann oder umgekehrt. Es können aber natürlich auch beide Teile magnetisch ausgeführt sein. Die Wirkung des Antriebsmittels AM kann auch durch ein z.B. elektromagnetisches Wanderfeld oder eine andere fernwirkende Kraft erzeugt werden.

Die in Figur 11 gezeigte Ausführungsform ist wiederum insbesondere geeignet für eine Bedampfungseinrichtung zum Bedampfen eines Substrats mit einem Verdampfungsmaterial, insbesondere zur Molekularstrahlepitaxie. Dabei kann sich die Verschlussblende VT vor der Verdampferofenöffnung VOÖ hin- und herbewegen, um den Fluss des zu verdampfenden Materials freizugeben oder zu sperren. In Figur 11 ist das zusammen mit dem Kerbe-Eingriffsteil-Gelenk/Lager ausgebildete Funktionsteil Ft das einzige bewegliche Teil im Vakuum V. Um eine möglichst geradlinige horizontale Bewegung der Verschlussblende VT zu erreichen, sollte das Funktionsteil Ft in vertikaler Richtung möglichst lang sein. Wiederum kann das durch Kerbengrund 11 und Stirnbereich 21' definierte Gelenk durch eine seitliche Führung gemäß Figur 5 bzw. 6 geführt sein.

Figur 12 zeigt eine perspektivische Ansicht von vier Kerben-Eingriffsteil-Anordnungen in einer Einrichtung zur Molekularstrahlepitaxie und/oder zum Bedampfen eines Substrats mit einem Verdampfungsmaterial.

Die vier Kerbe-Eingriffsteil-Anordnungen sind so ausgebildet und angeordnet, dass eine Schaukelanordnung geschaffen wird, die um vier parallele Schwenkachsen SA schwenkbar ist.
Die vier Kerbe-Eingriffsteil-Anordnungen sind jeweils als Gelenk bzw. Lager ausgebildet.

Diese Ausführungsform zum Öffnen und Schließen einer Verdampferofenöffnung VOÖ ist sehr kompakt und beschreibt deswegen gegenüber der vorigen Ausführungsform eine ausgeprägtere Kreisbogenbahn. Die in Figur 12 oberen Kerbenteile sind fest mit der Kammerwand KW oder anderen geeigneten Teilen verbunden. Das als Verschlussteilstange (Shutterstange) ausgebildete Funktionsteil Ft, an dem das Verschlussteil VT vorgesehen ist, ist zwischen den Kerbe-Eingriffsteil-Anordnungen mit einem Weicheisen- oder Magnetstück ausgestattet, welches durch die Kammerwand KW hindurch von einem auf der Luftseite platzierten Antriebsmittel AM (z.B. ein gelagerter Magnet) angezogen wird. Diese Kraftübertragung dient wiederum einerseits dazu, die Kerbe-Eingriffsteil-Anordnungen ausreichend zu belasten, sodass sich die beweglichen Wirkverbindungen der vier Kerbe-Gelenk-Anordnungen nicht lösen. Andererseits erlaubt die magnetische Kopplung den Antrieb und die Bewegung des Funktionsteils Ft und damit des Verschlussteils VT berührungslos von der Luftseite aus, um die Verdampferofenöffnung VOÖ zu öffnen und zu schließen. Dazu ist das luftseitige Antriebsmittel AM außen so bewegbar, dass sein Abstand zum Eisen- oder Magnetstück in der Vakuumkammer während der Bewegung konstant bleibt. Der luftseitige Magnet kann wie in allen anderen Ausführungsformen z.B. motorisch angetrieben werden, sodass sich eine automatisierte Bewegung realisieren lässt. Die in Figur 12 oberen Kerbe-Eingriffsteil-Anordnungen können im Bereich weniger Grad um eine oder zwei Achsen schwenkbar angebracht sein, wie z.B. unter Bezugnahme auf die Figur 7 beschrieben, um fertigungsbedingte Maßabweichungen und/oder durch thermische Verformung entstehende Verwindungen beweglicher Teile ausgleichen zu können.

Figur 13 zeigt eine perspektivische Ansicht eines Getriebes, um eine geradlinige Bewegung in eine drehende Bewegung umzuwandeln, wodurch das Funktionsteil Ft und somit das Verschlussteil Vt entlang einer im Wesentlichen geradlinigen Bahn Sr bewegbar ist.

In Figur 13 ist das Verschlussteil VT an einer Stange St3, die das Funktionsteil Ft umfasst, befestigt, die über zwei drehbare Teile D1 und D1' auf einer weiteren Stange St1 rollt. Die drehbaren Teile D1, D1' sind also sowohl in Eingriff mit der Stange St3 als auch mit der Stange St1. Die Stange St1 ist feststehend. Die feststehende Stange St1 kann in separate Abschnitte unterbrochen werden, wie in Figur 13 zu sehen, oder kann durch eine Halterung umfasst werden, um die Stange St3 von außerhalb einer Vakuumkammer anzutreiben. Ein Teil der Kammerwand KW der Vakuumkammer ist gestrichelt gezeichnet. Durch die durch das Antriebsmittel AM erzeugte magnetische Zugkraft wird das Getriebe, insbesondere die jeweiligen beweglichen Wirkverbindung, sicher gehalten. Wird diese Beaufschlagungskraft groß genug gewählt, kann die Einbaulage des Getriebes beliebig gewählt werden, d.h. es kann bei ausreichender seitlicher Führung auch seitlich liegend oder über Kopf gedreht eingebaut werden. Auch hier kann z.B. ein Drehgelenk an der oberen Stange St3 vorgesehen werden, mit dem sich der vordere und der hintere Teil der Stange St1 um eine Achse parallel zur Schieberichtung Sr um einen geringen Betrag gegeneinander verdrehen können, um Fertigungstoleranzen und thermische Verformungen auszugleichen, sodass die drehbaren Teile D1, D1' entlang der vollen Länge ihrer Kerbengründe bzw. Stirnbereiche belastet werden. Wiederum können die vier Gelenke um die Achsen SA durch seitliche Führungen gemäß Figur 5 bzw. 6 geführt sein.

Wie bei den anderen Ausführungsformen mit magnetischer Kopplung, um die bewegliche Wirkverbindung zwischen Stirnbereich und Kerbengrund anzudrücken oder allgemein um die Kerbe-Eingriffsmittel-Anordnung zusammenzuhalten, sind vorzugsweise entsprechende Nothalterungen, wie z.B. Anschläge, Anlagen, Klammern, etc. vorzusehen. Diese Nothalterungen verhindern, dass sich bei abgenommenem oder anderweitig nicht oder nur gering wirkendem magnetischen oder magnetisierbaren Antriebsmittel die Kerbe-Eingriffsmittel-Anordnung(en) so weit bewegen kann (können), dass das Eingriffsmittel aus der Kerbe tritt und im Extremfall die Kerbe-Eingriffmittel-Anordnung auseinander fällt, blockiert oder anderweit negativ beeinflusst wird.

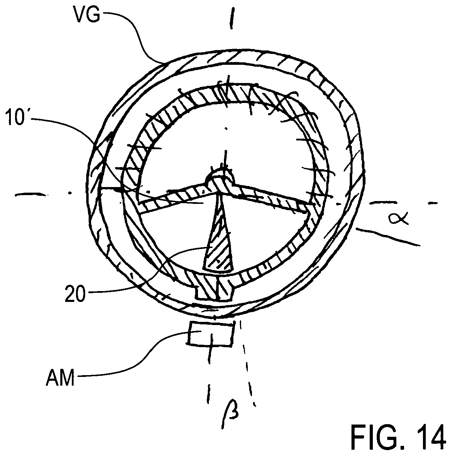

Figur 14 zeigt eine schematische Schnittansicht eines Drehlagers, das ein einziges Kerbe-Eingriffsteil-Gelenk umfasst und für Drehwinkel über 90°, insbesondere nahezu 180° geeignet ist. Die in Figur 1 gezeigte Ausführungsform ist für Drehwinkel bis nahe 90° geeignet, unter der Annahme, dass die Kerbe ortsfest ist und das Eingriffsteil mit einer Haltekraft in Richtung der Spiegelsymmetrieebene des Eingriffsteils bewegt wird. Bei zu großen Winkeln besteht die Gefahr, dass das Eingriffsteil seitlich aus der Kerbe herausrutscht.

Wird jedoch wie in Figur 14 gezeigt die Zuordnung umgekehrt, so ist das Eingriffsteil 20 ortsfest und die Kerbe 10' wird um das Eingriffsteil 20 geschwenkt (rotiert). Dabei ist wiederum die Kraft in Richtung der Spiegelsymmetrieebene der Kerbe 10' angeordnet. Nun kann der Drehbereich z.B. bis nahezu 180° ausgeweitet werden, indem die Kerbe 10' entsprechend geöffnet wird, ohne dass die Haltekraft eine Kraftkomponente erzeugen würde, die das Eingriffsteil 20 aus der Kerbe 10' herausbewegt. In Figur 14 kennzeichnet das Bezugszeichen AM außerhalb des zweckmäßig zylindrischen Vakuumgehäuses VG ein Wirkmittel, insbesondere einen Antriebs-, Halte- und/oder Kraftkopplungsmagneten. Das nach oben spitz zulaufende Eingriffsteil 20 erstreckt sich vorzugsweise ohne Querschnittsänderung parallel zu dem Vakuumgehäuse VG. Das zweckmäßig als Rotor R ausgebildete Teil mit der Kerbe 10' wird vorzugsweise aus magnetischem Material gefertigt und kann durch den Magneten AM um die Achse senkrecht zum Papier durch den Schnittpunkt der beiden strichpunktierten Linien rotiert werden. Der obere, durchgestrichene Teil des Rotors R ist optional. Er kann z.B. dazu beitragen, ein Verklemmen des Rotors R zwischen Vakuumgehäuse VG und Eingriffsteil 20 zu verhindern, wenn der Magnet AM abgenommen wird.
Damit sich das Eingriffsteil 20 bei großen Auslenkungen aus der dargestellten Mittelage nicht wesentlich verbiegt und damit die Kerbe 10' noch hinreichend definiert bleibt, um radiale Belastungen auf die Drehachse in gewissem Umfang aufnehmen zu können, erscheinen Werte von ungefähr a=5° und ungefähr β=12.5° sinnvoll, wodurch sich ein Rotationsbereich von etwa 145° ergibt.
Der maximale Drehwinkel ergibt sich z.B. zu 180° - 2α - 2β, wobei im Prinzip α und/oder β beliebig gewählt werden können.

## Patentansprüche

1. Vakuumanlage, mit einer Vorrichtung zur Bewegungsübertragung, Drehmomentübertragung, Kraftübertragung und/oder Bewegungsermöglichung , mit zumindest einer Kerbe (10; 10'),
die einen Kerbengrund (11; 11') aufweist, und zumindest einem Eingriffsteil (20; 20'), das einen Stirnbereich (21; 21') aufweist, wobei der Kerbengrund (11; 11') und der Stirnbereich (21; 21') zur beweglichen Wirkverbindung miteinander ausgebildet sind, und mit einer Kammer und Mitteln zur Erzeugung eines Vakuums in der Kammer, **dadurch gekennzeichnet,**
**dass** die Kammer durch eine Kammerwand (KW) begrenzt ist, und ein motorisch angetriebenes Wirkmittel (AM) vorgesehen ist,
um die Vorrichtung und/oder ein der Vorrichtung zugeordnetes Funktionsteil von außen durch die Kammerwand (KW) hindurch mittels einer fernwirkenden Kraft und berührungslos zu bewegen.

2. Vakuumanlage nach Anspruch 1, **dadurch gekennzeichnet,**
**dass** der Stirnbereich (21; 21') an dem Kerbengrund (11; 11') abstützbar ist oder umgekehrt.

3. Vakuumanlage nach Anspruch 1 oder 2, **dadurch gekennzeichnet, dass**
- zwischen dem Kerbengrund (11; 11') und dem Stirnbereich (21; 21') eine Schwenk-/Drehbewegung realisiert wird, und/oder
- mittels des Kerbengrunds (11; 11') und des Stirnbereichs (21; 21') eine Schwenk-/Drehachse definiert wird.

4. Vakuumanlage nach einem der vorhergehenden Ansprüche, **dadurch gekennzeichnet, dass** das zumindest eine Eingriffsteil (20; 20')
- als Schneide ausgebildet ist, und/oder
- zum Stirnbereich (21; 21') hin spitz zuläuft.

5. Vakuumanlage nach einem der vorhergehenden Ansprüche, **dadurch gekennzeichnet, dass** der Stirnbereich (21; 21') kantig ausgebildet ist und die Spitze des zumindest einen Eingriffsteils (20; 20') darstellt.

6. Vakuumanlage nach einem der vorhergehenden Ansprüche, **dadurch gekennzeichnet, dass** der Stirnbereich (21; 21') und/oder der Kerbengrund (11; 11')
- geradlinig verläuft, und/oder
- kreis-/kreisbogenförmig verläuft.

7. Vakuumanlage nach einem der vorhergehenden Ansprüche, **dadurch gekennzeichnet, dass** mindestens eine Seitenfläche des zumindest einen Eingriffsteils (20; 20') und/oder mindestens eine Seitenfläche der zumindest einen Kerbe (10; 10') zur Kontaktvermeidung ausgespart ist.

8. Vakuumanlage nach einem der vorhergehenden Ansprüche, **gekennzeichnet durch** mehrere Kerben (10; 10'), die jeweils einen Kerbengrund (11; 11') aufweisen, und mehrere Eingriffsteile (20; 20'), die jeweils einen Stirnbereich (21; 21') aufweisen, wobei ein oder mehrere Kerbengründe (11; 11') und ein oder mehrere Stirnbereiche (21; 21') zur beweglichen Wirkverbindung miteinander ausgebildet sind.

9. Vakuumanlage nach Anspruch 8, **dadurch gekennzeichnet, dass** mehrere Kerbengründe (11; 11') und mehrere Stirnbereiche (21; 21') zur wechselnden beweglichen Wirkverbindung miteinander ausgebildet sind.

10. Vakuumanlage nach Anspruch 8 oder 9, **dadurch gekennzeichnet, dass** mehrere Kerbengründe (11; 11') und mehrere Stirnbereiche (21; 21') ausgerichtet sind
- in zumindest einer linearen Anordnung, und/oder
- in zumindest einer kreis-/kreisbogenförmigen Anordnung.

11. Vakuumanlage nach einem der Ansprüche 8 bis 10, **dadurch gekennzeichnet, dass** die mehreren Kerben (10; 10') und die mehreren Eingriffsteile (20; 20') an zumindest einem Tragteil angeordnet sind, das ausgebildet ist als:
- zumindest eine Stange,
- zumindest ein kreis-/kreisbogenförmiges Teil (D1, D2),
- zumindest ein Hohlrad (Hr),
- zumindest ein Planetenrad,
- ein Sonnenrad.

12. Vakuumanlage nach Anspruch 11, **gekennzeichnet durch** wechselnde bewegliche Wirkverbindungen zwischen Kerbengründen und Stirnbereichen, die an zumindest zwei Tragteilen ausgebildet sind.

13. Vakuumanlage nach einem der Ansprüche 8 bis 12, **dadurch gekennzeichnet, dass** ein Tragteil zwischen wechselnden Wirkverbindungen sich auf einer aus Kreisbögen zusammengesetzten Bewegungsbahn bewegt und/oder eine Auf- und Abbewegung erfährt.

14. Vakuumanlage nach einem der vorhergehenden Ansprüche, **gekennzeichnet**
- **durch** ein Funktionsteil (FT), das mittels der zumindest einen Kerbe (10; 10') und dem zumindest einen Eingriffsteil (20; 20') so beweglich ist, dass es von einer Ausgangsposition in eine Zielposition bringbar ist, und/oder
- die zumindest eine Kerbe (10; 10') und das zumindest eine Eingriffsteil (20; 20') zur reproduzierbaren und zieldefinierten Positionierung eines Funktionsteils (FT) dienen.

15. Vakuumanlage nach Anspruch 14, **dadurch gekennzeichnet, dass** ein motorisch angetriebenes Wirkmittel (AM) vorgesehen ist, um das Funktionsteil (FT) mittelbar oder unmittelbar zu bewegen, nämlich mittels einer fernwirkenden Kraft von außen durch eine Kammerwand hindurch.

16. Vakuumanlage nach Anspruch 14 oder 15, **dadurch gekennzeichnet, dass** das Funktionsteil (FT) eine Verschlusseinrichtung zum Öffnen und Schließen einer Öffnung umfasst oder eine Proben- oder Substrattransfereinrichtung zum Bewegen von Proben oder Substraten.

17. Vakuumanlage nach einem der vorhergehenden Ansprüche, **dadurch gekennzeichnet, dass** die Vakuumanlage eine Einrichtung zur Molekularstrahlepitaxie und/oder zum Bedampfen eines Substrats mit einem Verdampfungsmittel ist.

18. Vakuumanlage nach einem der vorhergehenden Ansprüche, **gekennzeichnet durch** eine Heizeinrichtung zum Heizen der Kammer.

19. Vakuumanlage nach einem der vorhergehenden Ansprüche, **dadurch gekennzeichnet, dass** das Wirkmittel (AM) so ausgebildet und angeordnet ist, dass ein Andruck zwischen zumindest einem Kerbengrund und zumindest einem Stirnbereich, die eine bewegliche Wirkverbindung miteinander ausbilden, erzeugt wird, um ein ungewolltes Lösen der beweglichen Wirkverbindung zu vermeiden.

20. Vakuumanlage nach einem der vorhergehenden Ansprüche, **dadurch gekennzeichnet, dass**
- die Vorrichtung in der Kammer angeordnet ist, mit Ausnahme des motorisch angetriebenen Wirkmittels (AM), das außerhalb der Kammer positioniert ist, um von außen mittels einer fernwirkenden Kraft durch die Kammerwand (KW) hindurch in die Kammer hinein zu wirken, und/oder
- die Vorrichtung in der Kammer angeordnet ist, wobei die Heizeinrichtung in der Kammer oder außerhalb der Kammer angeordnet ist.

## Claims

1. Vacuum system, having a device for transmitting movement, transmitting torque, transmitting force and/or enabling movement, having at least one notch (10; 10'), which has a notch base (11; 11'), and at least one engagement part (20; 20'), which has an end region (21; 21'), wherein the notch base (11; 11') and the end region (21; 21') are configured for movable operative connection with one another, and having a chamber and means for generating a vacuum in the chamber, **characterised in that** the chamber is delimited by a chamber wall (KW), and a motor-driven active means (AM) is provided in order to move the device and/or a functional part associated with the device contactlessly from outside through the chamber wall (KW) by means of a remotely acting force.

2. Vacuum system according to claim 1, **characterised in that** the end region (21; 21') can be supported on the notch base (11; 11') or *vice versa.*

3. Vacuum system according to claim 1 or 2, **characterised in that**
- a pivoting/rotational movement is produced between the notch base (11; 11') and the end region (21; 21'), and/or
- a pivot/rotation axis is defined by means of the notch base (11; 11') and the end region (21; 21').

4. Vacuum system according to any one of the preceding claims **characterised in that** the at least one engagement part (20; 20')
- is in the form of a blade, and/or
- tapers to a point towards the end region (21; 21').

5. Vacuum system according to any one of the preceding claims, **characterised in that** the end region (21; 21') is angular and represents the tip of the at least one engagement part (20; 20').

6. Vacuum system according to any one of the preceding claims, **characterised in that** the end region (21; 21') and/or the notch base (11; 11')
- extends linearly, and/or
- extends in the form of a circle/arc of a circle.

7. Vacuum system according to any one of the preceding claims, **characterised in that** at least one side face of the at least one engagement part (20; 20') and/or at least one side face of the at least one notch (10; 10') is hollowed out in order to avoid contact.

8. Vacuum system according to any one of the preceding claims, **characterised by** a plurality of notches (10; 10'), each of which has a notch base (11; 11'), and a plurality of engagement parts (20; 20'), each of which has an end region (21; 21'), wherein one or more notch bases (11; 11') and one or more end regions (21; 21') are configured for movable operative connection with one another.

9. Vacuum system according to claim 8, **characterised in that** a plurality of notch bases (11; 11') and a plurality of end regions (21; 21') are configured for alternate movable operative connection with one another.

10. Vacuum system according to claim 8 or 9, **characterised in that** a plurality of notch bases (11; 11') and a plurality of end regions (21; 21') are oriented
- in at least one linear arrangement, and/or
- in at least one circular/circular-arc-shaped arrangement.

11. Vacuum system according to any one of claims 8 to 10, **characterised in that** the plurality of notches (10; 10') and the plurality of engagement parts (20; 20') are arranged on at least one carrier part which is in the form of:
- at least one rod,
- at least one circular/circular-arc-shaped part (D1, D2),
- at least one hollow wheel (Hr),
- at least one planetary wheel,
- a sun wheel.

12. Vacuum system according to claim 11, **characterised by** alternating movable operative connections between notch bases and end regions which are formed on at least two carrier parts.

13. Vacuum system according to any one of claims 8 to 12, **characterised in that** a carrier part, between alternating operative connections, moves on a movement path composed of circular arcs and/or undergoes an up and down movement.

14. Vacuum system according to any one of the preceding claims, **characterised**
- **by** a functional part (FT) which is movable by means of the at least one notch (10; 10') and the at least one engagement part (20; 20') in such a manner that it can be brought from a starting position into a target position, and/or
- the at least one notch (10; 10') and the at least one engagement part (20; 20') serve for the reproducible and purposive positioning of a functional part (FT).

15. Vacuum system according to claim 14, **characterised in that** a motor-driven active means (AM) is provided for moving the functional part (FT) indirectly or directly, namely by means of a remotely acting force from outside through a chamber wall.

16. Vacuum system according to claim 14 or 15, **characterised in that** the functional part (FT) comprises a closing device for opening and closing an opening, or a sample or substrate transfer device for moving samples or substrates.

17. Vacuum system according to any one of the preceding claims, **characterised in that** the vacuum system is a device for molecular beam epitaxy and/or for vacuum coating a substrate with an evaporation agent.

18. Vacuum system according to any one of the preceding claims, **characterised by** a heating device for heating the chamber.

19. Vacuum system according to any one of the preceding claims, **characterised in that** the active means (AM) is so configured and arranged that contact pressure is generated between at least one notch base and at least one end region, which form a movable operative connection with one another, in order to avoid unintentional disassociation of the movable operative connection.

20. Vacuum system according to any one of the preceding claims, **characterised in that**
- the device is arranged in the chamber, with the exception of the motor-driven active means (AM), which is positioned outside the chamber in order to act into the chamber from outside by means of a remotely acting force through the chamber wall (KW), and/or
- the device is arranged in the chamber, wherein the heating device is arranged in the chamber or outside the chamber.

## Revendications

1. Installation à vide, avec un dispositif servant à transmettre un mouvement, un couple de rotation, une force et/ou servant à permettre un mouvement, avec au moins une encoche (10 ; 10'), qui présente un fond d'encoche (11 ; 11'), et au moins une partie de prise (20 ; 20'), qui présente une zone frontale (21 ; 21'), dans laquelle le fond d'encoche (11 ; 11') et la zone frontale (21 ; 21') sont réalisés pour coopérer l'un avec l'autre de manière mobile, et avec une chambre et des moyens servant à générer un vide dans la chambre,
**caractérisée en ce que** la chambre est délimitée par une paroi de chambre (KW), et un moyen actif (AM) entraîné par un moteur est prévu pour déplacer au moyen d'une force agissant à distance et sans contact le dispositif et/ou une partie fonctionnelle associée au dispositif depuis l'extérieur à travers la paroi de chambre (KW).

2. Installation à vide selon la revendication 1, **caractérisée en ce que** la zone frontale (21 ; 21') peut prendre appui au niveau du fond d'encoche (11 ; 11'), ou inversement.

3. Installation à vide selon la revendication 1 ou 2, **caractérisée en ce que**
- un mouvement de pivotement/de rotation est réalisé entre le fond d'encoche (11 ; 11') et la zone frontale (21 ; 21'), et/ou
- un axe de pivotement/de rotation est défini au moyen du fond d'encoche (11 ; 11') et de la zone frontale (21 ; 21').

4. Installation à vide selon l'une quelconque des revendications précédentes, **caractérisée en ce que** l'au moins une partie de prise (20 ; 20')
- est réalisée sous la forme d'une lame, et/ou
- converge en pointe en direction de la zone frontale (21 ; 21').

5. Installation à vide selon l'une quelconque des revendications précédentes, **caractérisée en ce que** la zone frontale (21 ; 21') est réalisée de manière angulaire et constitue la pointe de l'au moins une partie de prise (20 ; 20').

6. Installation à vide selon l'une quelconque des revendications précédentes, **caractérisée en ce que** la zone frontale (21 ; 21') et/ou le fond d'encoche (11 ; 11')
- s'étend de manière rectiligne, et/ou
- s'étend de manière à présenter une forme de cercle/d'arc de cercle.

7. Installation à vide selon l'une quelconque des revendications précédentes, **caractérisée en ce qu'**au moins une surface latérale de l'au moins une partie de prise (20 ; 20') et/ou au moins une surface latérale de l'au moins une encoche (10 ; 10') sont évidées pour éviter tout contact.

8. Installation à vide selon l'une quelconque des revendications précédentes, **caractérisée par** plusieurs encoches (10 ; 10'), qui présentent respectivement un fond d'encoche (11 ; 11'), et plusieurs parties de prise (20 ; 20'), qui présentent respectivement une zone frontale (21 ; 21'), dans laquelle un ou plusieurs fonds d'encoche (11 ; 11') et une ou plusieurs zones frontales (21 ; 21') sont réalisés pour coopérer les uns avec les autres de manière mobile.

9. Installation à vide selon la revendication 8, **caractérisée en ce que** plusieurs fonds d'encoche (11 ; 11') et plusieurs zones frontales (21 ; 21') sont réalisés pour coopérer les uns avec les autres de manière mobile en alternance.

10. Installation à vide selon la revendication 8 ou 9, **caractérisée en ce que** plusieurs fonds d'encoche (11 ; 11') et plusieurs zones frontales (21 ; 21') sont orientés
- selon au moins un agencement linéaire, et/ou
- selon au moins un agencement en forme de cercle/d'arc de cercle.

11. Installation à vide selon l'une quelconque des revendications 8 à 10, **caractérisée en ce que** les nombreuses encoches (10 ; 10') et les nombreuses parties de prise (20 ; 20') sont agencées au niveau d'au moins une partie de support, qui est réalisée sous la forme de :
- au moins une tige,
- au moins une partie (D1, D2) en forme de cercle/d'arc de cercle,
- au moins une roue creuse (Hr),
- au moins une roue planétaire,
- une roue solaire.

12. Installation à vide selon la revendication 11, **caractérisée par** des coopérations mobiles en alternance entre des fonds d'encoche et des zones frontales, qui sont réalisés au niveau d'au moins deux parties de support.

13. Installation à vide selon l'une quelconque des revendications 8 à 12, **caractérisée en ce qu'**une partie de support se déplace entre des coopérations en alternance sur une trajectoire de déplacement composée d'arcs de cercle et/ou subit un déplacement vers le haut et vers le bas.

14. Installation à vide selon l'une quelconque des revendications précédentes,
**caractérisée**
- **par** une partie fonctionnelle (FT), qui est mobile au moyen de l'au moins une encoche (10 ; 10') et de l'au moins une partie de prise (20 ; 20') de sorte qu'elle peut être amenée depuis une position de départ dans une position cible, et/ou
- l'au moins une encoche (10 ; 10') et l'au moins une partie de prise (20 ; 20') servent au positionnement reproductible et défini en termes de cible d'une partie fonctionnelle (FT).

15. Installation à vide selon la revendication 14, **caractérisée en ce qu'**un moyen actif (AM) entraîné par un moteur est prévu pour déplacer indirectement ou directement la partie fonctionnelle (FT), à savoir au moyen d'une force agissant à distance depuis l'extérieur à travers une paroi de chambre.

16. Installation à vide selon la revendication 14 ou 15, **caractérisée en ce que** la partie fonctionnelle (FT) comprend un système d'obturation servant à ouvrir et à fermer une ouverture ou un système de transfert d'échantillons ou de substrats servant à déplacer des échantillons ou des substrats.

17. Installation à vide selon l'une quelconque des revendications précédentes, **caractérisée en ce que** l'installation à vide est un système d'épitaxie par jet moléculaire et/ou de vaporisation d'un substrat avec un moyen d'évaporation.

18. Installation à vide selon l'une quelconque des revendications précédentes, **caractérisée par** un système de chauffage servant à chauffer la chambre.

19. Installation à vide selon l'une quelconque des revendications précédentes, **caractérisée en ce que** le moyen actif (AM) est réalisé et agencé de telle sorte qu'une compression entre au moins un fond d'encoche et au moins une zone frontale, qui réalisent une coopération l'un avec l'autre de manière mobile, est générée pour éviter que la coopération mobile ne se défasse de manière involontaire.

20. Installation à vide selon l'une quelconque des revendications précédentes,
**caractérisée en ce que**
- le dispositif est agencé dans la chambre, à l'exception du moyen actif (AM) entraîné par un moteur, qui est positionné à l'extérieur de la chambre pour agir depuis l'extérieur au moyen d'une force agissant à distance à travers la paroi de chambre (KW) dans la chambre, et/ou
- le dispositif est agencé dans la chambre, dans laquelle le système de chauffage est agencé dans la chambre ou à l'extérieur de la chambre.
